# EUROPÄISCHE PATENTSCHRIFT

(11) **EP 0 763 837 B1**
(45) Veröffentlichungstag und Bekanntmachung des Hinweises auf die Patenterteilung: **01.12.1999**
(21) Anmeldenummer: 96118557.6
(22) Anmeldetag: 25.09.1993
(51) Int. Cl.: H01H 13/50, H02B 1/04, H01H 13/06, H01H 9/04

(54) **Schalteinrichtung**
Switching device
Dispositif de commutation

(30) Priorität: 05.10.1992 DE 4233447
(43) Veröffentlichungstag der Anmeldung: 19.03.1997
(62) Teilanmeldung aus: 93115508.9
(73) Patentinhaber: Barlian, Reinhold, D-97980 Bad Mergentheim (DE)
(72) Erfinder: Barlian, Reinhold, 97980 Bad Mergentheim (DE); Lux, Karl-Heinz, 97990 Weikersheim (DE); Mezger, Lothar, 97980 Bad Mergentheim (DE); Fischle, Martin, 97980 Bad Mergentheim (DE)

(56) Entgegenhaltungen:
- DE-A- 2 316 872
- DE-C- 3 543 885
- DE-U- 8 908 758
- DE-U- 8 908 871
- FR-A- 2 614 132
- US-A- 3 235 678

## Beschreibung

Die Erfindung betrifft eine Schalteinrichtung mit den Merkmalen des Oberbegriffs des Anspruchs 1.

Eine aus der DE-U-8908871 bekannte Einrichtung dieser Art weist einen Schalter auf, der in einer Kammer eines Außengehäuses mit Gießharz vergossen ist. Der Schalter ist mittels einem auf dem Außengehäuse lösbar befestigten Betätiger über einen axial verlagerbaren Stößel betätigbar. Die Schalteinrichtung kann in einen Halterahmen eines Montagefußes eingesetzt und über an Gehäuseschmalseiten vorgesehenen Klemmengehäusen mittels Schnappbefestigung gehalten werden.

Die DE-U-8908758 offenbart ein Haushaltsgerät, wie Kaffeemaschine oder dergleichen. In der Wand des Gerätes befindet sich ein Drucktastenschalter, der mittels einer Rastverbindung befestigt ist.

Die FR-A-2614132 offenbart ein elektrotechnisches Gerät mit einem Gehäuse, das mit einem anderen Gehäuse verbunden werden kann. Dazu ist ein aus Kunststoff bestehendes Verbindungsteil vorgesehen, das einen Kunststoffbolzen und eine Kunststoffbuchse aufweist. Die Kunststoffbuchse befindet sich innerhalb des Gehäuses, während der Kunststoffbolzen die eine Breitseitenwand des Gehäuses weit überragt. Beim Verbinden zweier Gehäuse greift der überragende Kunststoffbolzen des einen Gehäuses in die Kunststoffbuchse des anderen Gehäuses ein.

Die DE-C-3543885 offenbart einen für Kraftfahrzeuge vorgesehenen Schalter, dem ein separater kastenartiger Montagerahmen zugeordnet ist. Der Montagerahmen weist Rast- und Verriegelungselemnete in Form von Stegen und Vertiefungen auf, die für die Befestigung eines benachbarten Montagerahmens vorgesehen sind.

Die Aufgabe der Erfindung besteht darin, eine Schalteinrichtung mit den Merkmalen des Oberbegriffs des Anspruchs 1 dahingehend weiterzubilden, daß für eine genau positionierte Aneinanderreihung mehrerer Außengehäuse mit einfachen Mitteln eine weitgehend überstandsfreie metallfeste Verbindung und sichere Arretierung erzielt wird.

Diese Aufgabe wird erfindungsgemäß durch die Merkmale des Anspruchs 1 gelöst.

Bevorzugte Ausgestaltungen und Weiterbildungen der Erfindung sind durch die Merkmale der Unteransprüche gekennzeichnet.

Weitere Vorteile und wesentliche Einzelheiten der Erfindung sind der nachfolgenden Beschreibung und der Zeichnung zu entnehmen, die in schematischer Darstellung bevorzugte Ausführungsformen als Beispiel zeigt. Es stellen dar:

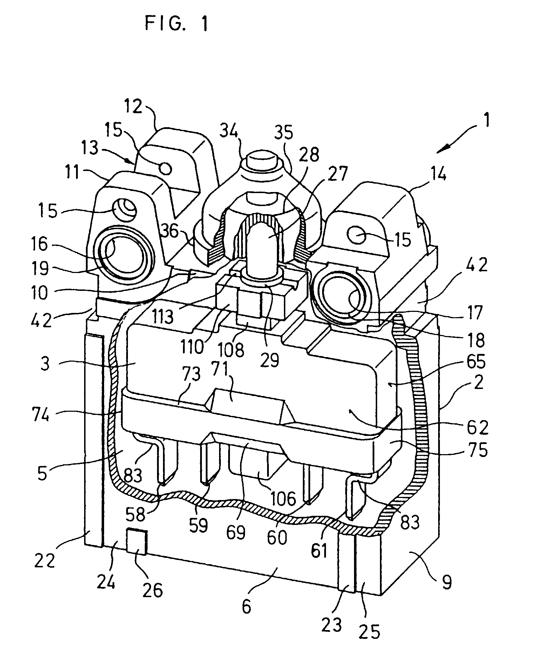

- FIG. 1: eine erfindungsgemäße Schalteinrichtung in einer Gesamtansicht, teilweise geschnitten,

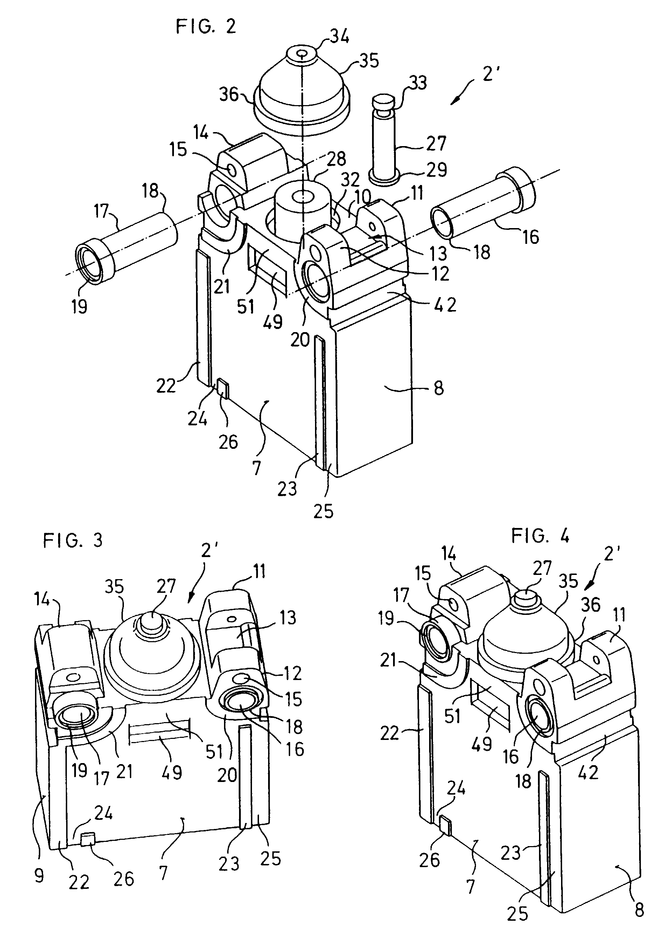

- FIG. 2 bis 4: das Außengehäuse der Schalteinrichtung für einen schmalen Einzelschalter in verschiedenen Ansichten,

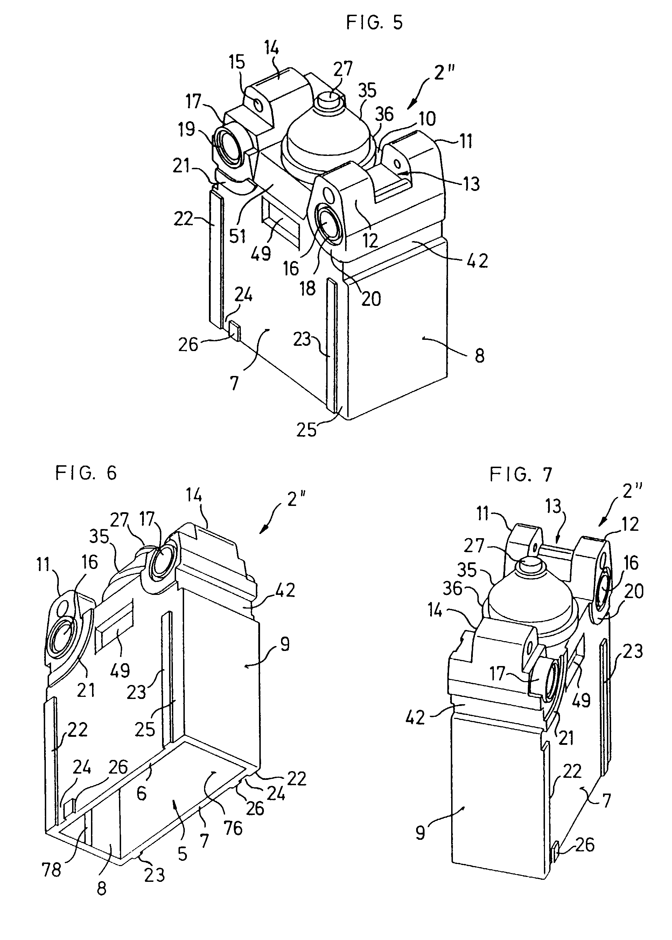

- FIG. 5 bis 7: das Außengehäuse der Schalteinrichtung für einen etwas breiteren Doppelschalter in verschiedenen Ansichten,

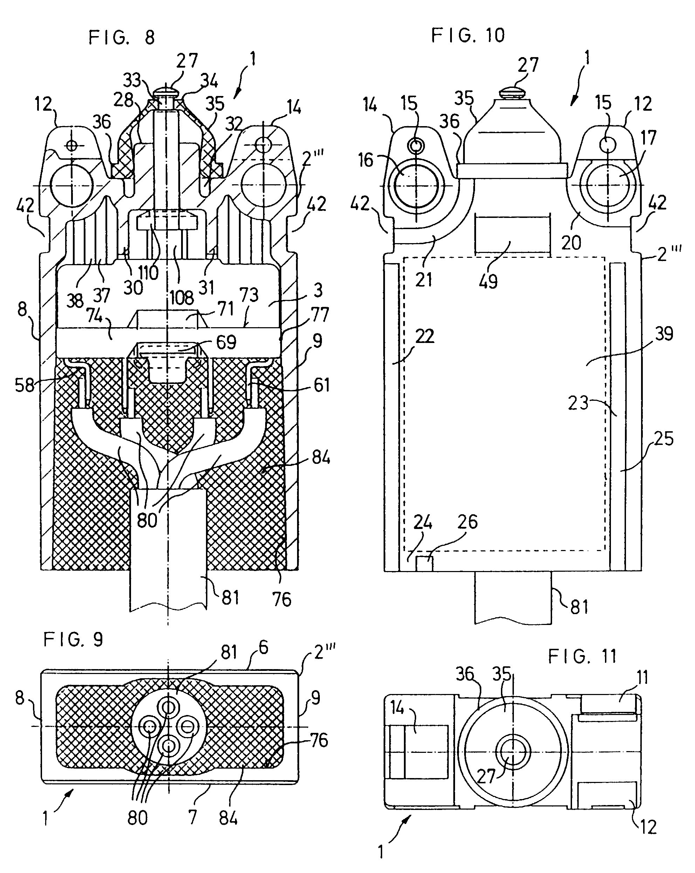

- FIG. 8: die Schalteinrichtung ähnlich der FIG. 1 in einer geschnittenen Breitseitenansicht mit angeschlossener und vergossener Schlauchleitung,
- FIG. 9: die Schalteinrichtung der FIG. 8 in einer Ansicht von unten,
- FIG. 10: die Schalteinrichtung der FIG. 8 in einer geschlossenen Breitseitenansicht,

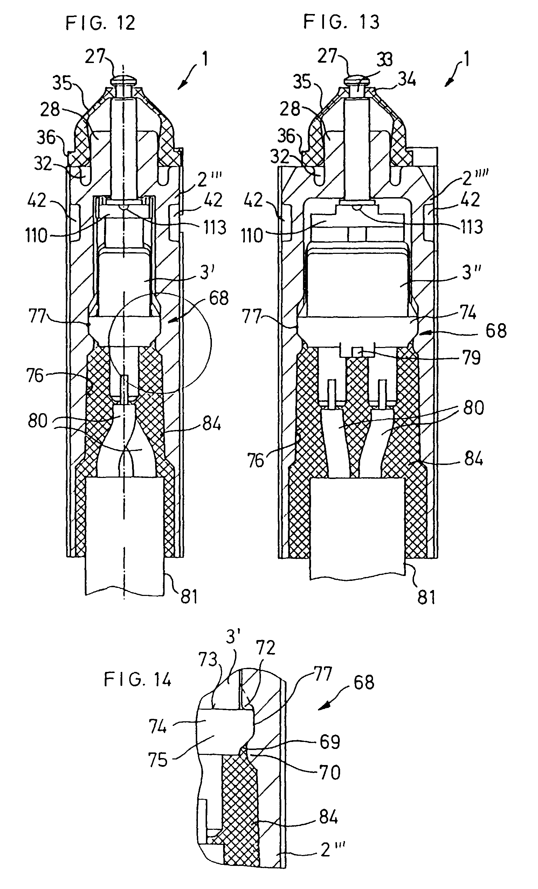

- FIG. 11: die Schalteinrichtung der FIG. 10 in einer Draufsicht,
- FIG. 12: die Schalteinrichtung ähnlich der FIG. 10 in Einzelschalterausbildung in einer geschnittenen Schmalseitenansicht,
- FIG. 13: die Schalteinrichtung ähnlich der FIG. 10 in Doppelschalterausbildung in einer geschnittenen Schmalseitenansicht,
- FIG. 14: einen Teil der in der FIG. 12 eingekreisten Rastverbindung in vergrößerter Darstellung,

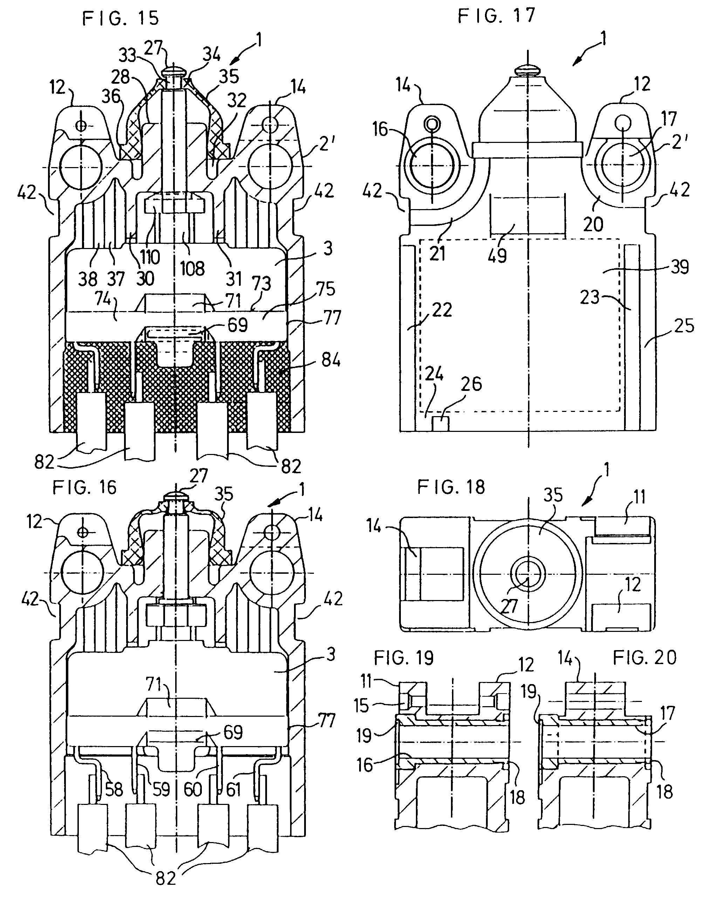

- FIG. 15: die Schalteinrichtung ähnlich der FIG. 1 in einer geschnittenen Breitseitenansicht mit angeschlossenen und vergossenen Einzeladern,
- FIG. 16: die Schalteinrichtung der FIG. 15, jedoch ohne Verguß und mit heruntergedrücktem Betätigungsstößel,
- FIG. 17: die Schalteinrichtung der FIG. 15 in einer geschlossenen Breitseitenansicht,
- FIG. 18: die Schalteinrichtung der FIG. 17 in einer Draufsicht,
- FIG. 19 und 20: die oberen Befestigungsbereiche der Schalteinrichtung gemäß den FIG. 17 und 18 in geschnittenen Schmalseitenansichten,

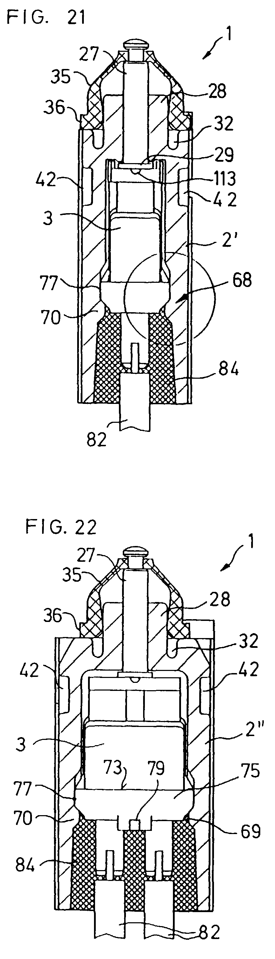

- FIG. 21: die Schalteinrichtung der FIG. 15 mit angeschlossenen und vergossenen Einzeladern in Einzelschalterausbildung in einer geschnittenen Schmalseitenansicht,
- FIG. 22: die Schalteinrichtung der FIG. 15 mit angeschlossenen und vergossenen Einzeladern in Doppelschalterausbildung in einer geschnittenen Schmalseitenansicht,

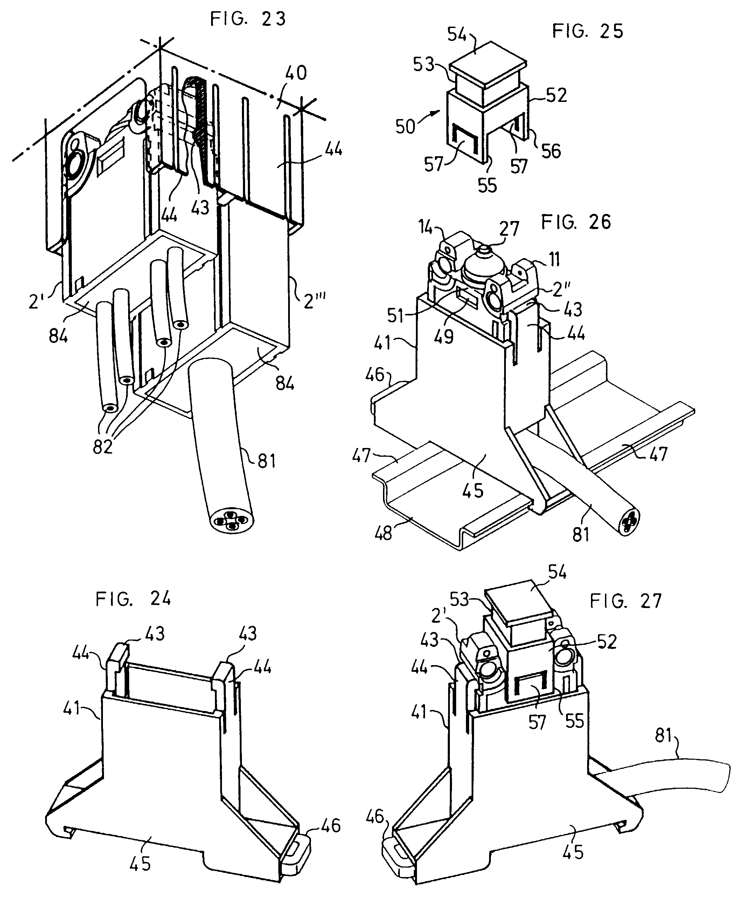

- FIG. 23: die Schalteinrichtung mit den Einzeladern und die mit der Schlauchleitung in einem Halterahmen,
- FIG. 24: einen Montagefuß für die Schalteinrichtung in einer Gesamtansicht,
- FIG. 25: einen auf den Oberteil der Schalteinrichtung aufsetzbaren Überhubbetätiger,
- FIG. 26: die in den Montagefuß eingesetzte Schalteinrichtung mit der Schlauchleitung und
- FIG. 27: die Schalteinrichtung der FIG. 26 mit dem aufgesetzten Überhubbetätiger der FIG. 25.

Die erfindungsgemäße Schalteinrichtung 1 weist ein Außengehäuse 2 und einen Schalter 3 mit einem Schaltgehäuse 4 auf, das in einer Kammer 5 des Außengehäuses 2 gelagert ist. Das im wesentlichen rechteckförmige Außengehäuse 2 besitzt zwei Breitseitenwände 6, 7 und zwei Schmalseitenwände 8, 9 sowie eine Oberwand 10, die die nach unten hin offene Kammer 5 begrenzen.

Auf der Oberwand 10 können in der Nähe der einen Schmalseitenwand 8 zwei Befestigungshöcker 11, 12 angeformt sein, zwischen denen ein Abstand 13 besteht. In der Nähe der gegenüberliegenden Schmalseitenwand 9 kann auf der Oberwand 10 ein einzelner Befestigungshöcker 14 vorgesehen sein, der sich etwa in der Ebene des Abstands 13 der gegenüberliegenden Befestigungshöcker 11, 12 befindet.

An den Befestigungshöckern 11, 12, 14, in denen Querbohrungen 15 ausgebildet sind, können hier nicht näher dargestellte Zusatzteile für die Schalterbetätigung wahlweise angelenkt werden.

Unter den beiden Befestigungshöckern 11, 12 kann in einer Bohrung des Außengehäuses 2 in der Nähe der einen Schmalseitenwand 8 eine sich zu dieser parallel erstreckende Metallbuchse 16 gelagert sein. Auf der gegenüberliegenden Gehäuseseite, also parallel zur Schmalseitenwand 9, kann in einer Bohrung unter dem einen Befestigungshöcker 14 eine weitere Metallbuchse 17 gelagert sein. Die Länge der Metallbuchsen 16, 17 ist so bemessen, daß sie im wesentlichen gleich der Breite des Außengehäuses 2, gemessen zwischen den beiden Breitseitenwänden 6,7, ist. Durch die Metallbuchsen 16, 17 können Befestigungsschrauben hindurchgesteckt und für eine sichere Befestigung mit großem Drehmoment angezogen werden, ohne daß eine Verformung oder ein Kaltfluß des aus Kunststoff, vorzugweise thermopplastischen Kunststoff, hergestellten Außengehäuses 2 auftreten kann. Die beiden Metallbuchsen 16, 17 sind völlig identisch und besitzen an dem einen Ende einen vorzugsweise rohrförmigen Vorsprung 18 und an dem gegenüberliegenden Ende einen vorzugsweise durch eine ringförmige Ausdrehung gebildeten Rücksprung 19. Die Metallbuchsen 16,17 sind allerdings in zueinander entgegengesetzten Richtungen im Außengehäuse 2 gelagert, das heißt, daß in der Ebene der Breitseitenwand 6 beispielsweise der Rücksprung 19 der einen Metallbuchse 16 und der Vorsprung 18 der anderen Metallbuchse 17 sich befinden, während in der Ebene der gegenüberliegenden Breitseitenwand 7 beispielsweise der Vorsprung 18 der einen Metallbuchse 16 und der Rücksprung 19 der anderen Metallbuchse 17 vorgesehen sind. Die Metallbuchsen 16, 17 können zweckmäßig selbsthaltend, das heißt gegen Herausfallen gesichert, in den Bohrungen des Außengehäuses 2 gelagert sein.

Außerdem kann es günstig sein, an den Breitseitenwänden 6,7 des Außengehäuses 2 bevorzugt unterhalb der Vorsprünge 18 einen vorzugsweise etwa viertelkreisförmigen Teilkreissteg 20 auszubilden und auf Abstand unterhalb des Rücksprungs 19 der Metallbuchsen 16, 17 ebenfalls einen teilkreisförmigen Stegteil 21 vorzusehen.

Dadurch können zwei oder mehr Schalteinrichtungen 1 exakt aneinandergereiht werden, indem der Buchsenvorsprung 18 der einen Schalteinrichtung in den Buchsenrücksprung 19 der anderen Schalteinrichtung eingreift und ebenso der Buchsenvorsprung 18 der anderen Schalteinrichtung in den Buchsenrücksprung 19 der einen Schalteinrichtung eingreift. Außerdem umgreifen die teilkreisförmigen Stegteile 21 die Teilkreisstege 20, so daß eine mehrfache formschlüssige Arretierung der paketierbaren bzw. aneinanderreihbaren Schalteinrichtungen gegeben und stets eine genaue Ausrichtung und Positionierung der Baueinheiten gewährleistet ist.

Darüber hinaus kann es günstig sein, an dem Außengehäuse 2 Stege 22, 23 und Vertiefungen 24, 25 zur Arretierung der anreihbaren Schalteinrichtungen 1 vorzusehen. Die Stege 22, 23 und die Vertiefungen 24, 25 können bevorzugt am unteren Gehäuseteil, also im Bereich der Kammer 5, an den Breitseitenwänden 6,7 angeformt sein. Die Stege 22, 23 und die Vertiefungen 24, 25 können sich in Längsrichtung des Außengehäuses 2 erstrecken, wobei der eine Steg 22 unmittelbar an die Gehäuseecke angrenzen kann, während der andere Steg 23 etwa so weit von der anderen Gehäuseecke beabstandet ist, wie der eine Steg 22 breit ist. Außerdem kann auf Abstand neben dem einen Steg 22 ein weiterer, vorzugsweise kürzerer Stegteil 26 angeformt sein. Bei einer Aneinanderreihung der Schalteinrichtungen 1 greift ein Steg 23 in die zwischen dem Steg 22 und dem Stegteil 26 befindliche Vertiefung 24 ein und gleichzeitig greift ein Steg 22 in die zwischen der Gehäuseecke und dem Steg 23 gebildete Vertiefung 25 ein, wodurch ebenfalls eine exakte formschlüssige Positionierung der Baueinheiten erzielt wird, ohne daß besondere Ausricht- oder Justierarbeiten auszuführen sind.

Im oberen Teil des Außengehäuses 2 kann ein Betätigungsstößel 27 vorgesehen sein, der in der Oberwand 10 in der Mitte zwischen den beiden Metallbuchsen 16, 17 in einem an der Oberwand 10 angeformten Zylinder 28 axial verschiebbar gelagert ist. Der Betätigungsstößel 27 kann zweckmäßig aus einem Metall, vorzugsweise Messing, hergestellt sein und einen Ringbund 29 aufweisen, der sich im Innern des Außengehäuses 2 zwischen zwei Gehäusewandteilen 30, 31 an der Unterseite des Zylinders 28 abstützt. Zur Materialeinsparung und formstabilen Oberwandausbildung kann es zweckmäßig sein, in der Oberwand 10 eine den Zylinder 28 umgebende Ringnut 32 vorzusehen. An dem aus dem Zylinder 28 herausragenden Endbereich des Betätigungsstößels 27 kann außerdem eine Umfangsnut 33 ausgebildet sein, in die ein Haltebund 34 einer domförmigen gummielastischen Schutzkappe 35 dicht eingreift, die den Betätigungsstößel 27, den Zylinder 28 und die Ringnut 32 überdeckt und mit einem Wulst 36 auf der Oberwand 10 des Außengehäuses 2 dicht aufliegt.

Um mit möglichst geringem Materialeinsatz eine dennoch hohe Festigkeit und einwandfreie Formstabilität des Außengehäuses 2 zu erzielen, kann es günstig sein, weitgehend gleiche Gehäusewanddicken vorzusehen und dazu insbesondere im oberen Bereich des Außengehäuses 2 bzw. der Kammer 5 Versteifungsrippen 37 mit dazwischenliegenden Rillen 38 auszubilden. Zudem kann das Außengehäuse 2 an mindestens einer der Breitseitenwände 6, 7 außen ein Beschriftungsfeld 39 aufweisen, an dem beispielsweise der Firmenname, der Gerätetyp, die Zulassungsnummer sowie technische Daten angebracht, insbesondere aufgedruckt werden können.

Eine besonders vorteilhafte Befestigung der Schalteinrichtung 1 kann darin bestehen, letztere in einen Halterahmen 40 oder einen Montagefuß 41 einzusetzen. Dafür kann es günstig sein, am Außengehäuse 2, vorzugsweise an beiden Schmalseitenwänden 8, 9, je einen Schnappbefestigungsteil 42 auszubilden, der eine bevorzugt als rechteckförmige Nut ausgeführte Schnappausnehmung sein kann. In diese Schnappausnehmung 42 kann ein als vorzugsweise wulstförmiger Schnappvorsprung ausgebildetes Gegenstück 43 formschlüssig einschnappen, das dazu an einer federnden Zunge 44 des Halterahmens 40 oder des Montagefußes 41 angeformt sein kann. Der Halterahmen 40 kann beispielsweise an einer Schaltschrankrückseite an handelsübliche Betätiger, wie Taster, Schalthebel und dergleichen, angerastet werden und so ausgelegt sein, daß wahlweise eine oder mehrere Schalteinrichtungen 1 nebeneinander angeordnet werden können. Beim Einsetzen der Schalteinrichtung 1 in den Halterahmen 40 biegen sich die Zungen 44 zunächst etwas auseinander. Sobald sich die Schalteinrichtung 1 in der Endposition befindet, schnappen die Gegenstücke 43 der Zungen 44 formschlüssig in die Schnappausnehmungen 42 aufgrund der Rückstellkraft der Zungen 44 ein, so daß ein absolut fester Halt gewährleistet ist. Zum Lösen der Schalteinrichtung 1 aus dem Halterahmen 40 können die Zungen 44 beispielsweise mit einem Schraubendreher oder dergleichen so weit abgedrückt werden, daß die Schnappverbindung außer Eingriff gelangt.

Die Schalteinrichtung 1 wird in den Montagefuß 41 genauso eingesetzt wie in den Halterahmen 40. Auch das Lösen aus dem Montagefuß 41 kann mit Hilfe eines Schraubendrehers erfolgen. Der Montagefuß 41 kann einen C-förmigen Fußteil 45 aufweisen, in dem ein Befestigungsschieber 46 gelagert sein kann und der die abstrebenden Randteile 47 einer etwa U-förmigen Schiene 48 übergreift.

Weiterhin kann es vorteilhaft sein, am Außengehäuse 2 eine Klipsaussparung 49 auszubilden, an der ein Zubehörteil 50, insbesondere ein Überhubbetätiger, lösbar befestigt werden kann. Die Klipsaussparung 49 kann bevorzugt an beiden Breitseitenwänden 6,7 angeordnet und rechteckförmig sein. Über der Klipsaussparung 49 kann im Bereich der Oberwand 10 eine Aufschubschräge 51 für ein einfaches Befestigen des Überhubbetätigers 50 vorgesehen sein. Die Klipsaussparung 49 der Breitseitenwand 6, 7 und die Schnappausnehmung 42 der Schmalseitenwand 8, 9 können zweckmäßig in ein und derselben Ebene liegen, und zwar bevorzugt in dem zwischen der im oberen Teil des Außengehäuses 2 gelagerten Metallbuchse 16, 17 und dem oberen Ende des am Außengehäuse 2 angeformten Stegs 22, 23 bestehenden Abstandsbereich.

Der Überhubbetätiger 50 kann einen bevorzugt rechteckförmigen Rahmen 52 aufweisen, in dem ein von oben eingesetzter Hubteil 53, der bevorzugt ebenfalls rechteckförmig sein und eine Deckplatte 54 besitzen kann, axial verschiebbar gelagert ist. An der dem Hubteil 53 abgewandten unteren Seite des Rahmens 52 können zwei auf Abstand zueinander angeordnete Seitenwände 55, 56 angeformt sein, die je eine an den Innenseiten der Seitenwände 55, 56 vorstehende Klipsnase 57 aufweisen können. Beim Aufstecken des Überhubbetätigers 50 auf das Außengehäuse 2 gleiten die Seitenwände 55, 56 mit den Klipsnasen 57 über die Aufschubschräge 51, so daß in der Endpositon die Seitenwände 55, 56 an den Breitseitenwänden 6,7 anliegen und die Klipsnasen 57 in die Klipsaussparungen 49 formschlüssig eingreifen. Zum Lösen des Überhubbetätigers 50 können die Seitenwände 55, 56 etwas nach außen gebogen werden, so daß die Klipsnasen 57 außer Eingriff sind und der Überhubbetätiger 50 nach oben hin abgezogen werden kann.

Der elektrische Schalter 3 kann zweckmäßig sowohl als Einzelschalter 3' als auch als Doppelschalter 3'' ausgebildet sein, wobei jeder eigentliche Schalter vier Anschlußzungen 58, 59, 60, 61 aufweisen kann, die an der Schalterunterseite aus dem Schaltgehäuse 4 herausgeführt sind und zweckmäßig in einer Reihe liegen. Das heißt, daß der Einzelschalter 3' vier in einer Reihe liegende Anschlußzungen 58 bis 61 und der Doppelschalter 3'' zwei parallele Reihen mit je vier Anschlußzungen 58 bis 61 aufweist.

Das Schaltgehäuse 4 kann ebenfalls als im wesentlichen rechteckförmiger Körper gestaltet sein und zwei Breitseitenwandungen 62, 63, zwei Schmalseitenwandungen 64, 65, eine Unterwand 66 und eine Dachwand 67 besitzen. Um den Schalter 3 einfach und funktionssicher in dem Außengehäuse 2 exakt positionieren zu können, kann eine Rastverbindung 68 vorgesehen sein, mittels der der Schalter 3 in dem Außengehäuse 2 unverrückbar und genau ausgerichtet in definierter Position festgehalten wird. Die Rastverbindung 68 kann bevorzugt aus einer Rastausnehmung 69 und einem Rastvorsprung 70 bestehen, der in die Rastausnehmung 69 formschlüssig eingreift. Dabei kann es günstig sein, die Rastausnehmung 69 vorzugsweise außen an beiden Breitseitenwandungen 62, 63 und den Rastvorsprung 70 innen vorzugsweise an beiden Breitseitenwänden 6, 7 des Außengehäuses 2 vorzusehen. Es ist jedoch auch möglich, beispielsweise die Rastausnehmung 69 innen an den Breitseitenwänden 6, 7 des Außengehäuses 2 und den Rastvorsprung 70 außen an den Breitseitenwandungen 62, 63 des Schaltgehäuses 4 auszubilden.

Um den Schalter 3 bei der Montage schonend und verkantungsfrei von unten in die Kammer 5 des Außengehäuses 2 einschieben zu können, kann zweckmäßig eine Einführschräge 71 vorgesehen sein, die vorzugsweise am Schaltgehäuse 4 in einer Ebene über der Rastausnehmung 69 angeordnet sein kann. Dabei kann es auch günstig sein, die Einführschräge 71 in der Kammer 5 vorzugsweise vor oder an dem Rastvorsprung 70 auszubilden.

Damit der Schalter 3 mit Sicherheit nicht zu weit in die Kammer 5 eingeschoben werden kann, kann es günstig sein, einen Anschlag 72 und einen Gegenanschlag 73 vorzusehen. Der Anschlag 72 kann sich an den Seitenwänden, vorzugsweise den Breitseitenwänden 6, 7 des Außengehäuses 2 befinden und durch die unteren Enden der hier materialeinheitlich geformten Versteifungsrippen 37 gebildet sein. Das Schaltgehäuse 3 kann einen Bund 74 aufweisen, der im Bereich der Unterwand 66 an den Seitenwandungen 62 bis 65 und besonders vorstehend an den Breitseitenwandungen 64, 65 angeformt sein kann. Die den Anschlußzungen 58 bis 61 abgewandte obere Schmalseite des an den Breitseitenwandungen 62, 63 vorstehenden Bundes 74 kann den Anschlag 72 darstellen, der beim Einschieben des Schalters 3 in das Außengehäuse 2 am Anschlag 72 der Versteifungsrippen 37 zur Anlage gelangt.

Um eine sichere Abdichtung zwischen dem Schaltergehäuse 4 und den Seitenwänden 6 bis 9 des Außengehäuses 2 zu erzielen, kann es vorteilhaft sein, am Schaltgehäuse 4 eine Abdichtfläche 75 vorzusehen, die in bevorzugter Ausführungsform von der Außenfläche des Bundes 74 gebildet sein kann, die im wesentlichen parallel zu den Seitenwandungen 62 bis 65 liegt. Die Abdichtfläche 75 kann zu den Seitenwänden 6 bis 9 des Außengehäuses 2 hin so ausgelegt sein, daß zwischen den Innenflächen 76 des Außengehäuses 2 und der Abdichtfläche 75 des Schalters 3 lediglich ein schmaler ausgießbarer Spalt 77 besteht.

Zur Erhöhung der Sicherheit gegen Fehlmontage kann es vorteilhaft sein, eine Zwangsführung vorzusehen, die aus einer Führungsnut 78 und einer in diese eingreifenden Führungsnase 79 bestehen kann. Die Führungsnase 79 kann bevorzugt an der Schmalseitenwandung 64 des Schaltgehäuses 4 angeformt sein und zum Beispiel am unteren Rand des Bundes 74 vorstehen. Die Führungsnut 78 kann bevorzugt an der Innenfläche 76 des Außengehäuses 2 an einer der beiden Schmalseitenwände 8, 9 ausgebildet sein und sich in Einschubrichtung, also in Längsrichtung des Außengehäuses 2, erstrecken. Die Führungsnut 78 kann entweder als in die Schmalseitenwand 8, 9 eingebrachte Längsrille ausgeführt sein oder durch zwei vorstehende, auf Abstand parallel verlaufende Führungsstege gebildet sein, wobei die Breite der Führungsnut 78 durch den Abstand zwischen den beiden Führungsstegen gebildet ist.

An den nach unten abstrebenden Anschlußzungen 58 bis 61 des Schalters 3 können wahlweise die elektrischen Leiter 80 einer Schlauchleitung 81 oder elektrische Einzeladern 82 angeschlossen sein. Dabei kann es günstig sein, daß das die Einzeladern 82 aufnehmende Außengehäuse 2', 2'' in dessen Längsrichtung kürzer ist als das die Schlauchleitung 81 aufnehmende Außengehäuse 2''', 2''''. Um einen ausreichend großen Abstand der Anschlußzungen 58, 61 zu den Schmalseitenwänden 8, 9 und eine behinderungsfreie Montage beim Einführen des Schalters 3 in die Kammer 5 zu gewährleisten, kann es von Vorteil sein, die beiden äußeren Anschlußzungen 58, 61 mit einer treppenstufenförmigen Abkröpfung 83 zu versehen, so daß die Ebene der freien Anschlußzungenenden von den Schmalseitenwandungen 64, 65 des Schaltgehäuses 4 weiter entfernt ist als der die Unterwand 66 durchdringende Teil der Anschlußzungen 58, 61.

Bei einer bevorzugten Ausführung kann es günstig sein, die Breite des Außengehäuses 2', 2''', in dem ein Einfachschalter 3' gelagert ist, nur etwa 1,45 bis 1,65, vorzugsweise nur etwa 1,57 mal größer auszulegen als die Breite des Einfachschalters 3', gemessen zwischen den Breitseitenwänden 6, 7 bzw. Breitseitenwandungen 62, 63. Bei einem Außengehäuse 2'', 2'''', das einen Doppelschalter 3'' beinhaltet, kann die Breite des Außengehäuses 2'', 2'''' geringfügig größer sein, und zwar nur ungefähr 1,2 bis 1,35, vorzugsweise nur etwa 1,29 mal größer als die Breite des Doppelschalters 3'', gemessen zwischen den Breitseitenwänden 6, 7 des Außengehäuses 2'',2'''' bzw. den Breitseitenwandungen 62, 63 des Doppelschalters 3''. Zweckmäßig ist demnach das den Doppelschalter 3'' beinhaltende Außengehäuse 2'', 2'''' nicht doppelst so breit wie das den Einzelschalter 3' beinhaltende Außengehäuse 2', 2''', sondern nur etwa 1,3 bis 1,5, vorzugsweise etwa 1,41 mal breiter, gemessen zwischen den beiden Breitseitenwänden 6, 7 bzw. Breitseitenwandungen 62, 63. Das Schaltgehäuse 4 des Doppelschalters 3'' kann gegenüber dem Schaltgehäuse 4 des Einfachschalters 3' ebenfalls sehr schmal gehalten und weniger als doppelt so breit sein. Vorzugsweise kann die Breite des Schaltgehäuses 4 des Doppelschalters 3'' nur etwa 1,6 bis 1,8, bevorzugt nur etwa 1,7 mal größer sein als die Breite des Schaltghäuses 4 des Einfachschalters 3', gemessen zwischen den Breitseitenwandungen 62, 63.

Zur Erzielung einer explosionsgeschützten Ausführung kann es vorteilhaft sein, den dem Betätigungsstößel 27 gegenüberliegenden unteren Teil der Kammer 5 des Außenghäuses 2 mit einem Gießharz 84 dicht zu vergießen und die Einzeladern 82 bzw. die Schlauchleitung 81 darin dicht einzubetten. Dabei kann es günstig sein, das Gießharz 84 bis in den Bereich des Bundes 74 des Schalters 3 einzubringen, wobei das Gießharz 84 vorzugsweise durch die Kapillarkraft des schmalen Spaltes 77 zwischen der Abdichtfläche 75 und der Innenfläche 76 bis zur Höhe des Gegenanschlags 73 des Schalters 3 vordringen kann. Durch den definierten Spalt 77 und die sich anschließende räumliche Erweiterung wird erreicht, daß auch im Spaltbereich eine einwandfreie Gießharzabdichtung gegeben ist und durch die räumliche Erweiterung ein weiteres kapillarkraftbedingstes Vordringen des Gießharzes 84 unterbunden ist, so daß der sich über dem Bund 74 befindliche Teil der Kammer 5 in jedem Falle vergußfrei bleibt und somit immer eine sichere Funktion des Schalters 3 sichergestellt ist.

Für die Betätigung des Schalters 4 kann es zweckmäßig sein, einen Betätigungsteil 108 vorzusehen, auf dem ein Schaltdeckel 110 lösbar angeordnet ist. Im oberen Teil des Schaltdeckels 110 kann eine als Nut ausgebildete Vertiefung 113 vorgesehen sein, in die ein beispielsweise durch eine Drehzerspanung des Betätigungsstößels 27 an dessen ringbundseitigem Ende entstandener Butzen eingreifen kann.

## Patentansprüche

1. Schalteinrichtung mit einem Schalter (3), der in einer Kammer (5) eines Außengehäuses (2) vergossen ist, das mit einer Schnappbefestigung in einen Halterahmen (40) oder Montagefuß (41) einsetzbar ist, und mit einem am Außengehäuse (2) anklipsbaren Zubehörteil (50) für einen Betätigungsstößel (27) des Schalters (3), dadurch gekennzeichnet, daß das Außengehäuse (2) zwei parallel zu Schmalseitenwänden (8, 9) angeordnete Metallbuchsen (16, 17) aufweist, deren Länge etwa gleich der Breite des Außengehäuses (2) ist, daß die Metallbuchsen (16, 17) an ihrem einen Ende einen rohrförmigen Buchsenvorsprung (18) und an dem gegenüberliegenden Ende einen Buchsenrücksprung (19) mit einer ringförmigen Ausdrehung aufweisen, daß die Metallbuchsen (16, 17) in zueinander entgegengesetzten Richtungen angeordnet und je ein Buchsenvorsprung (18) und Buchsenrücksprung (19) an gegenüberliegenden Breitseitenwänden (6, 7) des Außengehäuses (2) vorgesehen sind und daß an den Breitseitenwänden (6, 7) ein den Buchsenvorsprung (18) auf Abstand teilweise umgebender Teilkreissteg (20) sowie ein den Buchsenrücksprung (19) auf Abstand teilweise umgebender Stegteil (21) angeformt ist, derart, daß der Stegteil (21) den Teilkreissteg (20) eines angereihten Außengehäuses (2) umgreift.

2. Schalteinrichtung nach vorstehendem Anspruch, dadurch gekennzeichnet, daß die eine Metallbuchse (17) an der einen Seite des Außengehäuses (2) unter einem Befestigungshöcker (14) und die andere Metallbuchse (16) an der gegenüberliegenden Gehäuseseite unter zwei auf Abstand zueinander angeordneten Befestigungshöckern (11, 12) gelagert ist.

3. Schalteinrichtung nach einem der Ansprüche 1 oder 2 dadurch gekennzeichnet, daß die Metallbuchsen (16, 17) in dem Außengehäuse (2) selbsthaltend gelagert sind.

4. Schalteinrichtung nach einem der Ansprüche 1 bis 3, dadurch gekennzeichnet, daß die Metallbuchsen (16, 17) identisch sind.

5. Schaltvorrichtung nach einem der Ansprüche 1 bis 4, dadurch gekennzeichnet, daß durch die Metallbuchsen (16, 17) Befestigungsschrauben hindurchsteckbar sind.

6. Schalteinrichtung nach einem der Ansprüche 1 bis 5, dadurch gekennzeichnet, daß im Bereich der Kammer (5) an einer Breitseitenwand (6, 7) des Außengehäuses (2) ein Steg (22, 23) angeformt und neben dem Steg (22, 23) eine Vertiefung (24, 25) für den Eingriff eines Steges (22, 23) eines weiteren Außengehäuses (2) ausgebildet ist.

7. Schalteinrichtung nach Anspruch 6, dadurch gekennzeichnet, daß an beiden Breitseitenwänden (6, 7) des rechteckförmigen Außengehäuses (2) nahe den Eckbereichen je einer der vorspringenden Stege (22, 23) in Längsrichtung des Außengehäuses (2) angeordnet ist, wobei der eine Steg (23) an der Breitseitenwand (6, 7) um das Maß der Breite des anderen Stegs (22) vom Gehäuseeckbereich entfernt liegt und auf Abstand neben dem anderen Steg (22) ein weiterer Stegteil (26) vorgesehen ist, der vorzugsweise kürzer als der Steg (22, 23) ist.

8. Schalteinrichtung nach einem der Ansprüche 1 bis 7, dadurch gekennzeichnet, daß das Außengehäuse (2) aus einem Kunststoff gebildet ist und weitgehend gleiche Wanddicken aufweist.

9. Schalteinrichtung nach einem der Ansprüche 1 bis 8, dadurch gekennzeichnet, daß im oberen Bereich der Kammer (5) des Außengehäuses (2) Versteifungsrippen (37) mit dazwischenliegenden Rillen (38) ausgebildet sind.

10. Schalteinrichtung nach einem der Ansprüche 1 bis 9, dadurch gekennzeichnet, daß ein Schnappbefestigungsteil als bevorzugt an mindestens einer der Schmalseitenwände (8, 9) vorgesehene Schnappausnehmung (42) ausgebildet ist und das in diese eingreifende Gegenstück ein am Halterahmen (40) oder Montagefuß (41) vorgesehener Schnappvorsprung (43) ist.

11. Schalteinrichtung nach Anspruch 10, dadurch gekennzeichnet, daß der Schnappvorsprung (43) an einer federnden Zunge (44) des Halterahmens (40) oder des Montagefußes (41) vorgesehen ist.

12. Schalteinrichtung nach einem der Ansprüche 1 bis 11, dadurch gekennzeichnet, daß das Außengehäuse (2) an der Außenseite mindestens einer der Breitseitenwände (6, 7) mindestens eine Klipsaussparung (49) zur Befestigung des Zubehörteils (50), insbesondere eines Überhubbetätigers, aufweist, in die eine Klipsnase (57) des Zubehörteils (50) einrastbar ist.

13. Schalteinrichtung nach den Ansprüchen 10 bis 12, dadurch gekennzeichnet, daß die Schnappausnehmung (42) in einer Ebene unter der im oberen Teil des Außengehäuses (2) gelagerten Metallbuchse (16, 17) und/oder einer Ebene über dem am unteren Teil des Außengehäuses (2) angeformten Steg (22, 23) vorgesehen ist.

14. Schalteinrichtung nach Anspruch 12, dadurch gekennzeichnet, daß die Klipsaussparung (49) in einer Ebene unter der im oberen Teil des Außengehäuses (2) gelagerten Metallbuchse (16, 17) und/oder einer Ebene über dem am unteren Teil des Außengehäuses (2) angeformten Steg (22, 23) vorgesehen ist.

15. Schalteinrichtung nach einem der Ansprüche 1 bis 14, dadurch gekennzeichnet, daß die Breite des Außengehäuses (2', 2'''), gemessen zwischen den beiden Breitseitenwänden (6, 7), mit einem Einfachschalter (3') etwa 1,45 bis 1,65, vorzugsweise etwa 1,57 mal größer ist als der Einfachschalter (3').

16. Schalteinrichtung nach einem der Ansprüche 1 bis 14, dadurch gekennzeichnet, daß die Breite des Außengehäuses (2'', 2''''), gemessen zwischen den beiden Breitseitenwänden (6, 7), mit einem Doppelschalter (3'') etwa 1,2 bis 1,35, vorzugsweise etwa 1,29 mal größer ist als der Doppelschalter (3").

17. Schalteinrichtung nach einem der Ansprüche 1 bis 14, dadurch gekennzeichnet, daß die Breite des Außengehäuses (2'', 2''''), gemessen zwischen den beiden Breitseitenwänden (6, 7), mit einem Doppelschalter (3''') etwa 1,3 bis 1,5, vorzugsweise etwa 1,41 mal breiter ist als das Außengehäuse (2', 2''') für einen Einfachschalter (3''').

## Claims

1. Switching device with a switch (3), which is cast in a chamber (5) of an outer casing (2), which can be inserted with a snap-action fastening in a retaining frame (40) or mounting foot (41) and with an accessory part (50) able to be clipped onto the outer casing (2), for an actuating plunger (27) of the switch (3), characterised in that the outer casing (2) comprises two metal bushes (16, 17) arranged parallel to narrow side walls (8, 9), the length of which bushes is approximately equal to the width of the outer casing (2), that at their one end the metal bushes (16, 17) comprise a tubular bush projection (18) and at the opposite end a bush recess (19) with an annular groove, that the metal bushes (16, 17) are arranged in opposite directions with respect to each other and respectively one bush projection (18) and bush recess (19) are provided on opposite broad side walls (6, 7) of the outer casing (2) and that integrally formed on the broad side walls (6, 7) are partial circular web (20) partly surrounding the bush projection (18) at a distance as well as a web part (21) partly surrounding the bush recess (19) at a distance so that the web part (21) surrounds the partial circular web (20) of an outer casing (2) placed in a row.

2. Switching device according to the preceding Claim, characterised in that one metal bush (17) is mounted on one side of the outer casing (2) below a fastening protuberance (14) and the other metal bush (16) is mounted on the opposite side of the casing below two fastening protuberances (11, 12) arranged at a distance apart.

3. Switching device according to one of Claims 1 or 2, characterised in that the metal bushes (16, 17) are mounted in a self-locking manner in the outer casing (2).

4. Switching device according to one of Claims 1 to 3, characterised in that the metal bushes (16, 17) are identical.

5. Switching device according to one of Claims 1 to 4, characterised in that fastening screws can be inserted through the metal bushes (16, 17).

6. Switching device according to one of Claims 1 to 5, characterised in that a web (22, 23) is integrally formed in the region of the chamber (5) on a broad side wall (6, 7) of the outer casing (2) and formed beside the web (22, 23) is a recess (24, 25) for the engagement of a web (22, 23) of a further outer casing (2).

7. Switching device according to Claim 6, characterised in that on both broad side walls (6, 7) of the rectangular outer casing (2), close to the corner regions, respectively one of the projecting webs (22, 23) is located in the longitudinal direction of the outer casing (2), one web (23) on the broad side wall (6, 7) lying remote from the corner region of the casing by the amount of the width of the other web (22) and provided at a distance beside the other web (22) is a further web part (26), which is preferably shorter than the web (22, 23).

8. Switching device according to one of Claims 1 to 7, characterised in that the outer casing (2) is formed from a synthetic material and has largely identical wall thicknesses.

9. Switching device according to one of Claims 1 to 8, characterised in that formed in the upper region of the chamber (5) of the outer casing (2) are strengthening ribs (37) with grooves (38) lying therebetween.

10. Switching device according to one of Claims 1 to 9, characterised in that a snap-action fastening part is constructed as a snap-action recess (42) preferably provided on at least one of the narrow side walls (8, 9) and the counter-part engaging in the latter is a snap-action projection (43) provided on the retaining frame (40) or mounting foot (41).

11. Switching device according to Claim 10, characterised in that the snap-action projection (43) is provided on a resilient tongue (44) of the retaining frame (40) or of the mounting foot (41).

12. Switching device according to one of Claims 1 to 11, characterised in that on the outside of at least one of the broad side walls (6, 7), the outer casing (2) comprises at least one clip recess (49) for fastening the accessory part (50), in particular an excess stroke actuator, in which a clip lug (57) of the accessory (50) can be engaged.

13. Switching device according to Claims 10 to 12, characterised in that the snap-action recess (42) is provided in a plane below the metal bush (16, 17) mounted in the upper part of the outer casing (2) and/or a plane above the web (22, 23) integrally formed on the lower part of the outer casing (2).

14. Switching device according to Claim 12, characterised in that the clip recess (49) is provided in a plane below the metal bush (16, 17) mounted in the upper part of the outer casing (2) and/or a plane above the web (22, 23) integrally formed on the lower part of the outer casing (2).

15. Switching device according to one of Claims 1 to 14, characterised in that the width of the outer casing (2', 2'''), measured between the two broad side walls (6, 7), with a single switch (3') is approximately 1.45 to 1.65, preferably approximately 1.57 times greater than the single switch (3').

16. Switching device according to one of Claims 1 to 14, characterised in that the width of the outer casing (2'', 2''''), measured between the two broad side walls (6, 7), with a double switch (3'') is approximately 1.2 to 1.35, preferably approximately 1.29 times greater than the double switch (3'').

17. Switching device according to one of Claims 1 to 14, characterised in that the width of the outer casing (2'', 2''''), measured between the two broad side walls (6, 7), with a double switch (3''') is approximately 1.3 to 1.5, preferably approximately 1.41 times wider than the outer casing (2'', 2''') for a single switch (3''').

## Revendications

1. Dispositif de commutation comprenant un commutateur (3) qui est coulé dans une chambre (5) d'un boîtier extérieur (2) qui peut être inséré avec une fixation immédiate dans un cadre de maintien (40) ou dans un pied de montage (41), et comprenant une pièce de monture (50) que l'on peut enclipser sur le boîtier extérieur (2) pour un poussoir d'actionnement (27) du commutateur (3),
caractérisé en ce que
• le boîtier extérieur (2) présente deux douilles métalliques (16, 17), disposées parallèlement aux parois (8, 9) des côtés étroits, douilles dont les longueurs sont à peu près égales à la largeur du boîtier extérieur (2),
• les douilles métalliques (16, 17) présentent à l'une de leurs extrémités une saillie de forme tubulaire (18) et à l'autre extrémité opposée un retrait (19) avec un alésage de forme annulaire,
• les douilles métalliques (16, 17) sont disposées dans des sens opposés l'un à l'autre et en ce qu'il est prévu respectivement une saillie (18) et un retrait (19) sur les parois opposées (6, 7) des côtés s'étendant en largeur du boîtier extérieur (2), et
• sur les parois (6, 7) des côtés larges du boîtier extérieur (2) il est formé une nervure semi-circulaire (20) qui entoure en partie à une certaine distance la saillie (18) de douille ainsi qu'un élément de nervure (21) qui entoure en partie à une certaine distance le retrait (19) de douille, d'une manière telle que l'élément de nervure (21) entoure la nervure semi-circulaire (20) d'un boîtier extérieur (2) monté à la suite.

2. Dispositif de commutation selon la revendication précédente,
caractérisé en ce que
l'une des douilles métalliques (17) est montée sur l'un des côtés du boîtier extérieur (2) sous un bossage de fixation (14) et l'autre douille métallique (16) est montée sur le côté opposé du boîtier sous deux bossages de fixation (11, 12) disposés à une certaine distance l'un de l'autre.

3. Dispositif de commutation selon l'une des revendications 1 ou 2,
caractérisé en ce que
les douilles métalliques (16, 17) sont montées dans le boîtier extérieur 2 de façon à s'auto-maintenir.

4. Dispositif de commutation selon l'une des revendications 1 à 3,
caractérisé en ce que
les douilles métalliques (16, 17) sont identiques.

5. Dispositif de commutation selon l'une des revendications 1 à 4,
caractérisé en ce que
on peut insérer à travers les douilles métalliques (16, 17) des vis de fixation.

6. Dispositif de commutation selon l'une des revendications 1 à 5,
caractérisé en ce que
dans la zone de la chambre (5) il est formé sur une paroi (6, 7) du boîtier extérieur (2), correspondant au côté de sa largeur, une nervure (22, 23)et il est constitué à côté de la nervure (22, 23) un renfoncement (24, 25) pour la venue en prise d'une nervure (22, 23) appartenant à un autre boîtier extérieur (2).

7. Dispositif de commutation selon la revendication 6,
caractérisé en ce que
sur les deux parois (6, 7) des côtés du boîtier extérieur (2) de forme rectangulaire, qui correspondent à la largeur, il est disposé à proximité des zones d'angles respectivement l'une des nervures saillantes (22, 23) dans le sens longitudinal du boîtier extérieur (2), l'une des nervures (23) se trouvant à une distance de la zone d'angle du boîtier qui est égale à la largeur de l'autre nervure (22) et il est prévu à une certaine distance à côté de l'autre nervure (22) un autre élément de nervure (26) qui est de préférence plus court que la nervure (22, 23).

8. Dispositif de commutation selon l'une des revendications 1 à 7,
caractérisé en ce que
le boîtier extérieur (2) est réalisé en matière plastique et présente des épaisseurs de paroi largement égales.

9. Dispositif de commutation selon l'une des revendications 1 à 8,
caractérisé en ce que
dans la zone supérieure de la chambre (5) du boîtier extérieur (2) on a constitué des nervures de raidissement (37) avec des gorges (38) qui se trouvent entre ces nervures.

10. Dispositif de commutation selon l'une des revendications 1 à 9,
caractérisé en ce que
• un élément de fixation encliquetable est constitué sous la forme d'un évidement d'encliquetage (42) prévu de préférence sur au moins l'une des parois (8,9) des côtés étroits et,
• dans cette pièce opposée venant en prise il y a une saillie d'encliquetage (43) prévue sur le cadre de maintien (40) ou le pied de montage (41).

11. Dispositif de commutation selon la revendication 10,
caractérisé en ce que
la saillie d'encliquetage (43) est prévue sur une languette faisant ressort (44) du cadre de maintien (40) ou du pied de montage (41).

12. Dispositif de commutation selon l'une des revendications 1 à 11,
caractérisé en ce que
le boîtier extérieur (2) présente sur le côté extérieur d'au moins l'une des parois (6, 7) des côtés correspondant à la largeur au moins un évidement de clip (49) servant à fixer la pièce de monture (50), en particulier un actionneur de soulèvement, dans lequel peut être encliqueté un nez de clip (57) de la pièce de monture (50).

13. Dispositif de commutation selon l'une des revendications 10 à 12,
caractérisé en ce que
l'évidement d'encliquetage (42) est prévu dans un plan sous la douille métallique (16, 17) qui est montée dans la partie supérieure du boîtier extérieur (2) et/ou dans un plan situé au dessus de la nervure (22, 23) qui est formée à la partie inférieure du boîtier extérieur (2).

14. Dispositif de commutation selon la revendication 12,
caractérisé en ce que
l'évidement de clip (49) est prévu dans un plan sous la douille métallique (16, 17) qui est montée dans la partie supérieure du boîtier extérieur (2) et/ou dans un plan situé au dessus de la nervure (22, 23) formée à la partie inférieure du boîtier extérieur (2).

15. Dispositif de commutation selon l'une des revendications 1 à 14,
caractérisé en ce que
la largeur du boîtier extérieur (2', 2'''), mesurée entre les deux parois des côtés (6, 7) correspondant à la largeur, est avec un commutateur simple (3') environ 1,45 fois à 1,65 fois et de préférence 1,57 fois plus grande que le commutateur simple (3').

16. Dispositif de commutation selon l'une des revendications 1 à 14,
caractérisé en ce que
la largeur du boîtier extérieur (2'', 2''''), mesurée entre les deux parois des côtés (6, 7) correspondant à la largeur, est avec un commutateur double (3'') environ 1,2 fois à 1,35 fois et de préférence 1,29 fois plus grande que le commutateur double (3'').

17. Dispositif de commutation selon l'une des revendications 1 à 14,
caractérisé en ce que
la largeur du boîtier extérieur (2'', 2''''), mesurée entre les deux parois des côtés (6, 7) correspondant à la largeur, est avec un commutateur double (3''') environ 1,3 fois à 1,5 fois et de préférence 1,41 fois plus large que le boîtier extérieur (2', 2''') pour un commutateur simple (3''').
